(19) Europäisches Patentamt
European Patent Office
Office européen des brevets

(11) Numéro de publication: **0 272 993 B1**

(12) **FASCICULE DE BREVET EUROPEEN**

(45) Date de publication de fascicule du brevet: **06.03.91**

(51) Int. Cl.5: **C09J 167/00**, C08J 7/04, B32B 27/36

(21) Numéro de dépôt: **87420336.7**

(22) Date de dépôt: **14.12.87**

(54) **Films polyester composites à adherence ameliorée et leur procédé d'obtention.**

(30) Priorité: **23.12.86 FR 8618231**

(43) Date de publication de la demande: **29.06.88 Bulletin 88/26**

(45) Mention de la délivrance du brevet: **06.03.91 Bulletin 91/10**

(84) Etats contractants désignés: **AT BE CH DE ES FR GB GR IT LI LU NL SE**

(56) Documents cités:
**EP-A- 0 129 674**
**EP-A- 0 188 620**
**WO-A-84/02144**
**FR-A- 2 289 552**

**DERWENT JAPANESE PATENTS REPORT, vol. 85, no. 37, 5-11 septembre 1985, section CH, Chemical J8-A, page 11; & JP-B-85 040 387 (TYOBO K.K.)**

(73) Titulaire: **RHONE-POULENC FILMS**
**25, quai Paul Doumer**
**F-92408 Courbevoie(FR)**

(72) Inventeur: **Grosjean, Pierre**
**14, rue Alexandre Berthier**
**F-69110 Sainte-Foy-Les-Lyon(FR)**
Inventeur: **Eyraud, Marcel**
**7, rue des Noyers**
**F-69005 Lyon(FR)**

(74) Mandataire: **Rioufrays, Roger et al**
**RHONE-POULENC INTERSERVICES Service Brevets Chimie Centre de Recherches des Carrières B.P. 62**
**F-69192 Saint-Fons Cédex(FR)**

**EP 0 272 993 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention a pour objet des films polyester composites orientés présentant, notamment, une adhérence améliorée vis-à-vis de revêtements finals d'application variés et leur procédé d'obtention.

Par l'expression "revêtements finals d'application" on désigne, au sens de la présente invention, les revêtements qui confèrent aux films polyester orientés des propriétés rendant possible des applications industrielles extrêmement diverses, bien connues du spécialiste. On sait que pour nombre d'applications industrielles, les films polyester ne peuvent être utilisés directement mais seulement après dépôt d'un revêtement adapté à chaque type d'application ; on peut citer à titre d'exemple des revêtements de matage destinés au dessin manuel ou aux tables traçantes ; les revêtements photosensibles pour les applications photographiques ; les revêtements diazoïques pour les applications microfilms, tirage de plans ou reprographie ; les revêtements d'impression ; les revêtements magnétiques pour la saisie d'informations diverses (sons, images, informatique) ; les revêtements métalliques ; les revêtements modifiant les propriétés de perméabilité aux gaz des films polyester utilisés comme emballages.

On sait encore que, par nature, l'accrochage des revêtements finals d'application sur la surface des films polyester n'est pas aisée. En effet, les films polyester présentent une surface relativement lisse et ont une réactivité chimique limitée et une très faible sensibilité aux solvants. Il est donc le plus souvent nécessaire de mettre d'abord en oeuvre un revêtement "primaire d'adhérence", - permettant l'ancrage des couches d'emploi - selon des formules chimiques plus ou moins complexes. De façon générale, ce primaire d'adhérence (ou couche d'ancrage) est mis en place par le transformateur. Il est donc facile pour ce dernier d'adapter la nature du primaire à l'application faite ultérieurement.

Les producteurs de films ont cherché à modifier eux-mêmes la surface des films par divers moyens. A cet effet on a proposé l'emploi comme primaire d'adhérence de polymères de nature variée. Une classe particulièrement intéressante de polymères utilisés à ce titre est constituée par des copolyesters présentant une pluralité de groupes hydrophiles et notamment de groupes hydroxysulfonyles ou leurs sels métalliques (par la suite les groupes acide sulfonique libre ou sels d'acide sulfonique seront désignés par l'expression "groupe oxysulfonyle" par commodité). Le dépôt de primaires d'adhérence de ce type peut être réalisé soit par enduction du film support à l'aide d'une dispersion ou d'une solution aqueuse (cf. brevets français n° 1.401.581 ét 1.602.002 ; brevet américain 4.476.189 ; brevet européen n° 78 559), soit par coextrusion ou laminage (cf. demandes de brevets japonais publiées sous les n° 50/135 086 et 79/153 883). Le dépôt d'un primaire d'adhérence du type copolyester à groupes oxysulfonyle par enduction implique le recours à des copolyesters à teneurs élevées en motifs récurrents à groupes oxysulfonyles afin de rendre possible la dispersion ou la dissolution du copolyester sulfoné dans l'eau. Le procédé d'enduction manque de souplesse puisqu'il restreint la gamme des copolyesters sulfonés utilisables à ceux à teneur élevée en motifs récurrents à groupes oxysulfonyles. Par ailleurs, selon leur composition, de tels copolyesters sulfonés peuvent présenter de basses températures de collage qui rendent les films composites difficiles à manipuler ou à mettre en oeuvre.

La coextrusion est un procédé de mise en place d'un revêtement primaire d'adhérence particulièrment recherché en raison des ses avantages. Elle est cependant mal adaptée au dépôt sur un polyester cristallin ou semi-cristallin d'un revêtement de copolyesters sulfonés fortement modifiés, soit en raison d'une teneur élevée en motifs récurrents à groupes oxysulfonyles, soit à la fois par la présence de tels motifs et de motifs récurrents dérivés d'autres molécules utilisées pour conférer des propriétés particulières aux copolyesters sulfonés (par exemple l'acide isophtalique). Ainsi, on a constaté que des copolyesters sulfonés du type téréphtalate/sulfo-5 isophtalate d'éthylèneglycol à teneur élevée en motifs sulfo-5 isophtalate, par exemple supérieure ou égale à 10 % en moles se prêtent mal à la formation de filsm composites par coextrusion. Leur utilisation implique un séchage long et onéreux en raison de leur hygroscopicité ; un séchage insuffisant perturbe le déroulement du procédé de coextrusion et conduit à des films de mauvaise qualité. En outre, les propriétés rhéologiques des copolyesters sulfonés sont fortement modifiées par la présence de motifs récurrents à groupes oxysulfoniques et décalées par rapport à celles du polyester utilisé pour obtenir le film support. Ce décalage dans les propriétés rhéologiques des deux polycondensats complique, voire même rend impossible l'obtention d'un film composite par coextrusion. Lorsque le copolyester sulfoné comporte d'autres motifs récurrents que les motifs sulfonés, un autre inconvénient vient s'ajouter à ceux mentionnés ci-avant. On a en effet remarqué, dans ce cas, qu'au delà d'une certaine teneur en motifs récurrents sulfonés (en général pour des teneurs supérieures ou égales à 5 % par rapport aux motifs de même nature), le film composite présente des températures de collage relativement basses, le plus souvent inférieure à 100 °C. Des copolyesters sulfonés présentant de basses températures de collage se prêtent mal aux opérations de fabrication et/ou de transformation, de sorte qu'il est le plus souvent difficile, sinon impossible, d'obtenir un film utilisable industriellement. Cela est tout particulièrement

le cas lorsqu'on a recours à des copolyesters sulfonés du type acide téréphtalique/acide dicarboxylique à groupes oxysulfonyles/acide isophtalique dérivés de l'éthylèneglycol. Par ailleurs le recours à la coextrusion implique de disposer d'une gamme étendue de copolyesters sulfonés de teneur en motifs récurrents à groupes oxysulfonyles adaptées à chaque type d'application, ce qui se traduit par des contraintes de stockage et de production. La nécessité de disposer de couches primaires de rugosités variées implique également de disposer de copolyesters sulfonés ayant des teneurs en charges variées, ce qui contribue à élargir la gamme des copolyesters sulfonés utilisables pour obtenir des primaires d'adhérence par coextrusion.

En résumé, le producteur de film à revêtement primaire d'adhérence à base de copolyesters sulfonés doit faire face à l'alternative suivante : avoir recours au procédé d'enduction pour les copolyesters à teneur élevée en motifs récurrents à groupes oxysulfonyles ou au procédé de coextrusion pour les copolyesters à faible teneur en motifs récurrents à groupes oxysulfonyles pour éviter les inconvénients précités.

L'industrie du film polyester est par conséquent à la recherche d'un moyen permettant de déposer un primaire d'adhérence à base de copolyester sulfoné sur un film polyester cristallin, semi-cristallin ou cristallisable, quelle que soit la teneur de ce copolyester sulfoné en motifs récurrents à groupes oxysulfonyles et plus particulièrement d'un moyen permettant le dépôt de ce revêtement par coextrusion pour des coplyesters à teneur élevée en motifs récurrents à groupes oxysulfonyles, en particulier une teneur supérieure ou égale à 5 % en moles de tels motifs par rapport aux motifs difonctionnels de même nature. L'industrie est également à la recherche d'un moyen permettant de limiter le nombre des copolyesters sulfonés à mettre à la disposition du fabricant pour la fabrication de films revêtus variant par leurs propriétés d'adhérence et/ou leur topographie. La présente invention a précisément pour object un moyen de résoudre ces problèmes.

Un premier objet de la présente invention réside dans un procédé d'obtention de films polyester composites à revêtement primaire d'adhérence à base de copolyesters sulfonés par coextrusion exempt des inconvénients des procédés de l'art antérieur.

Un deuxième objet de la présente invention réside dans de nouveaux films polyester composites à revêtements primaire d'adhérence à base de copolyesters sulfonés susceptibles de recevoir une large gamme de revêtements finals d'application.

Plus spécifiquement encore un premier objet de la présente invention réside dans un procédé d'obtention de films polyester composites orientés, à adhérence améliorée vis-à-vis de revêtements finals d'application variés, constitués par un film support (A), d'un polyester cristallin ou semi-cristallin, comportant sur au moins une de ses faces une couche contigüe d'un revêtement primaire d'adhérence (B) à base d'un copolyester à groupes oxysulfonyles, par dépôt dudit revêtement par coextrusion, caractérisé en ce que l'on fait appel pour la formation du revêtement primaire à aun mélange binaire constitué par :

a) un polyester cristallisable

b) un copolyester comportant une pluralité de groupes oxysulfonyles dans lequel le nombre de motifs récurrents à groupes oxysulfonyles exprimé par rapport à 100 motifs récurrents de même nature est compris entre 3 et 20, les proportions des composants (a) et (b) dans le mélange étant telles que le nombre de motifs récurrents à groupes oxysulfonyles présents dans le mélange exprimé par rapport au nombre total de motifs récurrents de même nature soit compris entre 2 et 15 %.

Un deuxième objet de la présente invention réside dans de nouveaux films polyester composites orientés, à adhérence améliorée vis-à-vis de revêtements finals d'application variés, constitués par un film support (A), d'un polyester cristallin ou semi-cristallin, comportant sur au moins une de ses faces une couche contigüe d'un revêtement primaire d'adhérence (B) à base d'un copolyester à groupes oxysulfonyles, caractérisés en ce que la couche B est constituée par un mélange binaire comprenant :

a) un polyester cristallin ou semi-cristallin

b) un copolyester comportant une pluralité de groupes oxysulfonyles dans lequel le nombre de motifs récurrents à groupes oxysulfonyles exprimé par rapport à 100 motifs récurrents de même nature est compris entre 3 et 20, les proportions des composants (a) et (b) dans le mélange étant telles que le nombre de motifs récurrents à groupes oxysulfonyles présents dans le mélange exprimé par rapport au nombre total de motifs récurrents de même nature soit compris entre 2 et 15 %.

Par polyester cristallisable, on désigne dans la présente demande des polyesters ou copolyesters qui, après extrusion à l'état fondu à travers une filière puis étirage du polymère amorphe, conduisent à des polyesters ou copolyesters cristallins ou semi-cristallins. La cristallinité des polymères est déterminée par les moyens usuels bien connus du spécialiste tels que la diffraction des rayons X, l'analyse thermique différentielle (cf. S.H.LIN et al J. Polymer Sci. Polymer Symposium 71 121-135 [1984] et le test de densité.

Les polyesters cristallisables mis en oeuvre pour la préparation de la couche support (A) et comme constituant (a) du mélange binaire de la couche de primaire d'adhérence (B) sont les polyesters et

copolyesters utilisés habituellement pour l'obtention des films polyester orientés par étirage et présentant, après étirage, une structure cristalline ou semi-cristalline.

A ce titre, on peut faire appel à tout polyester filmogène obtenu à partir d'un ou de plusieurs diacide(s) carboxylique(s) ou de leurs esters d'alkyle inférieur, (acide téréphtalique, acide isophtalique, acide naphtalènedicarboxylique-2,5, acide naphtalènedicarboxylique-2,6, acide naphtalènedicarboxylique-2,7, acide succinique, acide sébacique, acide adipique, acide azélaïque, acide diphényldicarboxylique et acide hexahydrotéréphtalique) et d'un ou plusieurs diols ou polyols comme l'éthylèneglycol, le propanediol-1,3, le butanediol-1,4, le néopentylglycol et le cyclohexanediméthanol-1,4, les polyoxyalkylèneglycol (polyoxyéthylèneglycol, polyoxypropylèneglycol ou leurs copolymères statistiques ou séquencés). Lorsqu'on fait appel à des copolymères, ils doivent présenter un taux suffisant du ou des composant(s) monomère(s) conférant la cristallinité. On fait appel de préférence aux homopolyesters et aux copolyesters dérivés de l'acide téréphtalique. Dans le cas des copolyesters, ces derniers comportent de préférence un taux de motifs téréphtalates représentant au moins 80 % en moles des motifs diacides et plus préférentiellement au moins 90 %. Les polyesters et copolyesters dérivés de l'éthylèneglycol et du butanedio-1,4 constituent une classe préférée de polymères utilisés pour la réalisation de la couche support (A) et comme composant (a) du mélange binaire du primaire d'adhérence constituant la couche (B). Il n'est pas essentiel pour la réalisation de l'invention que les polymères cristallisables mis en oeuvre pour la couche (A) et pour la couche (B) soient identiques. Avantageusement, le polyester est un polytéréphtalate d'éthylèneglycol dont la viscosité intrinsèque mesurée à 25° C dans l'o-chlorophénol est comprise entre 0,6 et 0,75 dl/g.

Comme copolyesters à groupes oxysulfonyles constituant le composant b) du mélange binaire, on fait appel à des copolyesters présentant une pluralité de groupes de formule générale :

$$(-SO_3)_nM \qquad (I)$$

dans laquelle :

- n est égal à 1 ou 2
- M représente un atome d'hydrogène, un métal alcalin (sodium ou potassium par exemple), un métal alcalino-terreux (calcium, barium), un cation ammonium, un cation ammonium quaternaire.

Les copolyesters à groupes oxysulfonyles sont des produits connus ; de tels copolyesters ont été décrits notamment dans les brevets français 1.401.581 et 1.602.002 déjà cités. Ces copolyesters peuvent être obtenus par polycondensation d'au moins un ou plusieurs acides dicarboxyliques aromatiques avec au moins un ou plusieurs diols aliphatiques et au moins un composé difonctionnel comportant au moins un groupe oxysulfonyle. Les composés difonctionnels à groupe oxysulfonyle peuvent être des diacides carboxyliques ou des diols tels que ceux cités dans le brevet français 1.602.002 ou le brevet américain n° 3.779.993. De préférence les groupes oxysulfonyles sont liés à un radical aromatique.

Parmi les composés difonctionnels à groupes oxysulfonyles on utilise plus préférentiellement des acids aromatiques de formule générale :

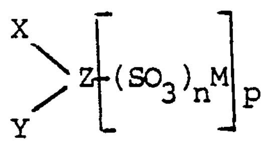

(II)

dans laquelle :

- M et n ont la signification déjà donnée ;
- Z est un radical aromatique polyvalent ;
- X et Y sont des radicaux hydroxycarbonyle ou dérivés : esters d'alcools aliphatiques inférieur ou halogénures d'acides (chlorure, bromure) ;
- p est un nombre entier égal à 1 ou 2.

Dans la formule (II), Z représente plus spécifiquement un radical phényle ou une combinaison de 2 ou plus de 2 radicaux phényles ortho ou péricondensés ou de deux ou plusieurs groupes phényles liés entre eux par des groupes inertes tels que des radicaux alcoylènes (méthylène, éthylène, propylène par exemple), alcoylidènes (propylidène) ou des groupes éther, cétone, sulfone.

Comme exemples spécifiques d'acides dicarboxyliques à groupes oxysulfonyles, on peut citer les acides hydroxysulfonyltéréphtalique ;
hydroxysulfonylisophtaliques (en particulier l'acide sulfo-5 isophtalique ) ; hydroxysulfonylorthophtaliques ;

hydroxysulfonyl-4 naphtalènedicarboxylique-2,7 ;
hydroxysulfonyldiphényl-dicarboxylique-4,4' ; les hydroxysulfonyl di-hydroxycarbonyl-4,4' diphénylsulfones ;
les hydroxysulfonyldihydroxycarbonyl-4,4' diphénylméthanes ;
l'acide (hydroxysulfonylphénoxy)-5 isophtalique,
l'acide (hydroxysulfonylpropoxy)-5 isophtalique. Les copolyesters sulfonés dérivés des acides hydroxysulfonylisophtaliques conviennent tout particulièrement bien à la préparation des films composites selon l'invention.

Les acides dicarboxyliques non sulfonés auxquels on fait appel pour préparer les copolyesters à groupes oxysulfonyles sont ceux habituellement utilisés pour l'obtention de polyesters. On peut citer à ce titre les acides téréphtalique ; isophtalique ; phtalique ; naphtalènedicarboxylique-2,5 ; naphtalènedicarboxylique-2,6 ; la dihydroxycarbonyl-4,4' diphénylsulfone ; le dihydroxycarbonyl-4,4' diphényléther ; les acides alcanedioïques comportant de 4 à 16 atomes de carbone tels que les acides adipique, succinique, sébacique. Ces acides peuvent être utilisé seuls ou en mélange entre eux. On fait appel, de préférence, aux acides téréphtalique et isophtalique et plus particulièrement à des mélanges de ces deux acides.

Lorsque les copolyesters à groupes oxysulfonyles comportent dans leur structure des motifs dérivés d'acides alcan-dicarboxyliques ces motifs représentent de 5 à 30 % en mole du total des acides dicarboxyliques non sulfonés. Dans ce cas des motifs isophtalates peuvent également être présent mais il est préférable que leur teneur ne dépasse pas 10 % en mole du total des acides dicarboxyliques non sulfonés.

Des copolyesters à groupes oxysulfonyles qui conviennent tout particulièrement bien à la mise en oeuvre de la présente invention sont ceux qui comportent un nombre de motifs téréphtalate représentant au moins 70 % du total des motifs diacides non sulfonés, de 5 à 30 % de motifs diacides aliphatiques en $C_4$ - $C_{16}$ de 0 à 10 % de motifs isophtalates, de 3 à 20 % du total des motifs récurrents dérivés des acides carboxyliques, de motifs acides dicarboxyliques à groupes sulfoniques et au plus 10 % en poids par rapport au copolyester de diéthylèneglycol ou de ses oligomères supérieurs tels que définis plus haut.

Parmi les diols utilisables pour préparer les copolyesters à groupes oxysulfonyles, on peut citer l'éthylèneglycol,
le propylèneglycol, le butanediol-1,3, le butanediol-1,4, le diméthyl-2,2 propanediol-1,3, le pentanediol-1,5, l'hexanediol-1,6,
le cyclohexanediméthanol, le néopentylglycol, le diétylèneglycol, les tri-, tetra-, penta- et hexaéthylèneglycol. L'éthylèneglycol et ses oligomères conviennent tout particulièrement bien. On peut les utiliser seuls ou en mélange entre eux et/ou avec d'autres diols. Les mélanges d'éthylèneglycol et de ses oligomères de poids moléculaire inférieur à 600 sont préférés. Dans ce dernier cas la teneur en oligomères de l'éthylèneglycol exprimée, en pourcentage pondéral du polyester sulfoné est de préférence au moins égale à 2 % et au plus égale à 30 %. Une proportion comprise entre 5 et 25 % en poids convient bien.

Comme indiqué ci-avant, la teneur des copolyesters sulfonés en motifs récurrents comportant des groupes oxysulfonyles exprimée par rapport au nombre total de motifs récurrents de même nature (diacide ou diol) est comprise entre 3 et 20 % et de préférence entre 5 et 20 %. Ainsi lorsqu'on fait appel à un acide dicarboxylique à groupes oxysulfonyles, le nombre de motifs récurrents dérivés de ce dernier représente de 3 à 20 % du nombre total des motifs récurrents dérivés des différents acides dicarboxyliques.

Parmi les copolyesters à groupes oxysulfonyles utilisés comme composant (b) du primaire (B) on fait appel préférentiellement à ceux comportant dans leur chaîne une pluralité de motifs téréphtalates, oxysulfonyl-5 isophtalates, éventuellement isophtalates et une pluralité de motifs dérivés de l'éthylèneglycol et/ou de ses oligomères. On a recours avantageusement à des copolyesters dans lesquels le nombre de motifs récurrents oxysulfonyl-5 isophtalates représentent de 3 à 20 % du nombre total des motifs dérivés des acides dicarboxyliques. Lorsque les copolyesters comportent à la fois des motifs téréphtalates et isophtalates, ces derniers représentent de préférence 70 % au plus du total téréphtalate/isophtalate. Un nombre de motifs isophtalates compris entre 5 et 60 % de ce total convient bien.

Les copolyesters sulfonés décrits précédemment peuvent être obtenus par les procédés connus habituels. Ainsi il est possible de faire réagir dans un premier temps le diol ou les diols avec un ester méthylique du ou des acides carboxyliques, l'un ou l'autre groupe de réactifs comportant le composé difonctionnel à groupe(s) oxysulfonyle(s), pour former par transestérification, en présence des catalyseurs habituels, les esters des diols correspondants puis, dans un deuxième temps, de réaliser la polycondensation de façon connue. Selon une autre méthode on peut préparer deux prépolycondensats dont l'un comprend les motifs récurrents à groupes oxysulfonyles et les faire réagir en présence des catalyseurs usuels jusqu'à obtention d'un copolyester de poids moléculaire plus élevé. Le copolyester à groupes

oxysulfonyles peut être un copolyester à blocs ou un copolyester statistique.

Le procédé selon l'invention convient tout spécialement bien à la mise en oeuvre de copolyesters sulfonés comportant au moins 5 % en moles de motifs récurrents à groupes oxysulfonyles, et notamment de groupes oxysulfonylisophtaliques par rapport aux motifs récurrents non sulfonés de même nature ; il convient tout particulièrement bien à la mise en oeuvre de tels copolyesters sulfonés comportant également une pluralité de motifs récurrents téréphtalates et isophtalates dans lesquels les motifs isophtalates représentent jusqu'à 70 % du total des motifs téréphtalates/isophtalates.

Les proportions pondérales de composants a) et b) dans le mélange binaire constituant le primaire (B) peuvent varier dans de larges limites en fonction de la teneur en motifs récurrents à groupes oxysulfoniques du copolyester sulfoné. Ces proportions sont calculées pour que le nombre de motifs récurrents à groupes oxysulfoniques exprimé par rapport au nombre total de groupes récurrents de même nature diacide ou diol) présents dans le mélange final soit compris entre 2 et 15 %, et de préférence entre 3 et 10 %. Dans ces conditions, la teneur pondérale du mélange en composant b) peut être comprise entre 20 et 80 % en poids suivant la teneur de b) en motifs récurrents à groupes oxysulfonyles. De préférence, on a recours à des mélanges binaires comportant de 40 à 60 % en poids de polyester cristallisable ou semi-cristallisable a) et de 60 à 40 % en poids de copolyester sulfoné b) dont la teneur en motifs récurrents à groupes oxysulfonyles est choisie, dans l'intervalle de 3 à 20 % du total des motifs de même nature, pour que la teneur du mélange en ces mêmes motifs reste comprise dans l'intervalle de 2 à 15 % du total des motifs de même nature présents dans le mélange et de préférence dans l'intervalle de 3 à 10 %.

On pourrait, sans sortir du cadre de la présente invention, faire appel comme composant a) à un mélange d'au moins deux polyesters cristallisables et comme composant b) à un mélange d'au moins deux copolyesters à groupes oxysulfonyles différents entre eux par la nature de leurs motifs récurrents et/ou leur teneur en motifs récurrents à groupes oxysulfonyles.

Les couches (A) et/ou (B) des films composites de l'invention peuvent contenir de fines particules destinées à modifier la rugosité de la surface de la couche qui les contient en leur conférant de bonnes propriétés de glissant.

Les charges présentes peuvent correspondre à de fines particules introduites dans la composition polymérique et/ou à des particules provenant de résidus catalytiques ou d'adjuvants de précipitation. Préférentiellement la rugosité est apportée par introduction de fines particules inertes dans la composition polymérique.

Les quantités de particules présentes sont telles que dans l'ensemble de la couche il y ait de 0,05 à 1 % et préférentiellement de 0,02 à 0,5 % en poids de particules. Quant au diamètre médian en volume de ces particules il est habituellement compris entre 0,1 et 5 microns et préférentiallement entre 0,2 et 3 microns.

La nature des particules inertes ajoutées peut être très variée : il peut s'agir de particules minérales (oxydes ou sels des éléments des groupes II, III et IV de la classification périodique des éléments), ou encore de particules polymériques. A titre illustratif, on peut citer parmi les charges utilisables : la silice, les silicoaluminates, le carbonate de calcium, MgO, $Al_2O_3$, $BaSO_4$, $TiO_2$. On peut évidemment faire appel à un mélange de plusieurs charges.

Lorsque la couche (B) contient des particules à l'état finement divisé, celles-ci peuvent être amenées par l'un quelconque ou plusieurs des polyesters constituants du mélange. Toutefois, et cela constitue un avantage de la présente invention, il est préférable en pratique que les charges soient apportées par le polyester cristallin ou cristallisable. En effet, il suffit de faire varier la quantité du composant a) chargé dans le mélange et/ou la teneur en charge de a) pour obtenir des couches (B) présntant des topographies variées, sans avoir recours à une gamme étendue de composants b) chargés.

Selon une variante de la présente invention les couches (A) et/ou (B) peuvent contenir en outre des additifs divers, utilisés habituellement dans le domaine de l'industrie du film, tels que, par exemple, des stabilisants thermiques permettant d'assurer le recyclage du film.

Les films composites, selon la présente invention, peuvent comporter une seule couche (B) ou deux couches (B) (une couche B sur chaque face de la couche support A). Dans ce cas les couches (B) peuvent être identiques ou différentes. Les couches (B) peuvent alors se différencier l'une de l'autre par la nature des polyesters a) et b) constituant le mélange binaire et/ou les proportions de a) et de b) dans le mélange, et/ou la présence ou l'absence de charges, et/ou par le taux de charge et/ou bien encore par leur épaisseur.

Le polyester cristallin, semi-cristallin ou cristallisable (a) utilisé comme constituant du mélange binaire peut être identique ou différent du polyester cristallin, semi-cristallin ou cristallisable constituant la couche (A). Cette différence peut résider dans la nature du polyester et/ou dans la présence d'une charge dans l'un ou l'autre des polyesters et/ou dans la teneur en charge de chacun des polyesters et/ou dans la granulométrie des charges et/ou dans la nature des charges. Ainsi, à titre d'exemple, le polyester

constituant la couche (A) peut être un polytéréphtalate d'éthylèneglycol et le composant (a) du mélange binaire, un copolyester cristallin ou cristallisable téréphtalate/isophtalate d'éthylèneglycol contenant moins de 20 % en moles de motifs isophtalates, ou bien le polyester constituant la couche (A) est un polytéréphtalate d'éthylèneglycol non chargé et le constituant (a) du mélange binaire est le même polyester contenant une charge.

Lorsque les films composites conformes à l'invention ne comporte qu'une couche (B), l'autre face de la couche (A) peut comporter une couche (C) différente des couches (A) et (B). La couche (C) peut se distinguer de la couche (A) par la nature du polyester qui la constitue et/ou par la présence de charges dans l'une ou l'autre couche et/ou par la nature et/ou la granulométrie et/ou le taux de ces charges. On dispose alors d'une moyen commode de modifier les propriétés de surface (topographie) de la face du film composite selon l'invention opposée à celle qui porte la couche (B). On peut alors en faire varier la rugosité, le coefficient de frottement, la résistance à l'abrasion en fonction de l'utilisation finale des films.

La mise en oeuvre des mélanges binaires pour la fabrication des films composites de la présente invention convient tout particulièrement bien à la coextrusion ; on les fabrique alors en alimentant dans une première filière linéaire un polyester conduisant à des films amorphes et devenant cristallins ou semi-cristallins après avoir été soumis à un traitement d'étirage, puis à un traitement de thermofixation, alors que l'on extrude simultanément, par au moins une deuxième filière disposée parallèlement à la première et à sa proximité immédiate, le mélange binaire.

Ce dernier peut être obtenu par toute technique connue de mélangeage et homogénéisation en un stade ou en plusieurs stades. Il peut être préparé directement juste avant son extrusion par fusion de ses composants à température élevée, ou peut avoir été préalablement préparé, extrudé et conditionné en granulés et remis en fusion après dilution éventuelle avec des granulés de polyester cristallin, semi-cristallin ou cristallisable.

Les conditions de préparation et d'extrusion du mélange binaire sont choisies de façon à ne pas provoquer une évolution de ce mélange vers la formation de polymères blocs, voire même statistiques, telle que les propriétés spécifiques à chaque constituant du mélange seraient modifiées profondément ou disparaitraient (par exemple la cristallinité). En particulier, le temps de séjour du mélange dans l'extrudeuse assurant le mélangeage des composants et l'extrusion est maintenu sufffisamment court pour ne pas provoquer de modification profonde des polymères.

Les conditions d'étirage du film composite extrudé sont celles habituellement mises en oeuvre dans la fabrication des films polyester. Ainsi, on peut procéder à un monoétirage ou à un biétirage effectué successivement ou simultanément dans deux directions en général orthogonales ou encore de séquences d'au moins 3 étirages où la direction d'étirage est changée à chaque séquence. Par ailleurs, chaque étirage monodirectionnel peut lui-même être effectué en plusieurs étapes. On pourra ainsi associer des séquences d'étirage comme par exemple deux traitements successifs de biétirage, chaque étirage pouvant être effectué en plusieurs phases.

De préférence, le film composite est soumis à un biétirage dans deux directions perpendiculaires. On peut par exemple procéder d'abord à un étirage dans la direction de déplacement du film (étirage longitudinal) puis à un étirage selon une direction perpendiculaire (étirage transversal) ou inversement. En général l'étirage longitudinal est effectué à un taux de 3 à 5 (c'est-à-dire que la longueur du film étiré représente de 3 à 5 fois la longueur du film amorphe) et à une température de 80 à 100 ° C et l'étirage transversal est effectué avec un taux de 3 à 5 à une température de 90 à 120 ° C.

L'étirage peut également être effectué de manière simultanée, c'est-à-dire simultanément dans le sens longitudinal et dans le sens transversal, par exemple avec un taux de 3 à 5 et à une température de 80 à 100 ° C.

Selon le choix des conditions d'étirage il est possible de générer des topographies particulières de surface telles que la présence de cavités entourant une protubérance. Cette possibilité de générer des topographies particulières dépend en outre du choix du polymère et de ses adjuvants.

Les films composites de l'invention peuvent être des films dits minces d'épaisseur globale comprise entre 5 et 40 micromètres ou des films dits épais dont l'épaisseur est habituellement supérieure à 40 et inférieure à 300 micromètres. Dans ces films composites la couche (B) ou les couches (B) ont une épaisseur habituellement comprise entre 0,3 micromètres et 10 micromètres et préférentiellement entre 0,5 micromètres et 5 micromètres.

Le procédé selon l'invention convient tout particulièrement bien à l'amélioration de l'adhérence des films polyester dits épais (dont l'épaisseur est supérieure à 40 micromètres) à des revêtements finals d'applications variés ; en effet, on a constaté que l'amélioration de l'adhérence des films épais à leurs revêtements finals d'application implique le recours à des copolyesters sulfonés à teneur plus élevée en motifs récurrents à groupes oxysulfonyles que les applications des films minces, et notamment à des

teneurs supérieures à 3 % et de préférence supérieures ou égales à 5 %. Le procédé selon l'invention permet, dans ce cas, d'obtenir de bonnes conditions de fabrication des films tout en atteignant de bonnes propriétés d'adhérence.

Les film composites de la présente invention peuvent, compte-tenu de leurs propriétés d'ancrage, être utilisés avantageusement dans de nombreux domaines où après enduction ils constitueront des films pour arts graphiques (couche de matage), des films diazoïques pour microfilm, des films pour bande magnétique, des films photos (films argentiques), ou encore des films pour impression et ou complexage destinés à l'emballage.

Un troisième objet de la présente invention réside dans les films polyester composites orientés selon l'invention comportant un revêtement final d'application déposé sur la couche (B).

Plus spécifiquement, la présente invention a encore pour objet des films composites complexes constitués par un film polyester orienté cristallion ou semi-cristallin support (A) comportant, sur au moins une de ces faces, un revêtement final d'application déposé sur une couche (B) d'un revêtement primaire d'adhérence à base d'un copolyester à groupes oxysulfonyles caractérisés en ce que la couche (B) est constituée par un mélange binaire comprenant :

a) un polyester cristallin ou semi-cristallin

b) un copolyester comportant une pluralité de groupes oxysulfonyles dans lequel le nombre de motifs récurrents à groupes oxysulfonyles exprimé par rapport à 100 motifs récurrents de même nature est compris entre 3 et 20, les proportions des composants (a) et (b) dans le mélange étant telles que le nombre de motifs récurrents à groupes oxysulfonyles présents dans le mélange exprimé par rapport au nombre total de motifs récurrents de même nature soit compris entre 2 et 15 %.

Dans les films polyester composites à revêtement final d'application selon la présente invention, le revêtement final est plus particulièrement un revêtement magnétique (couche d'oxydes métalliques ou de métal déposée par évaporation), un revêtement métallique (aluminium par exemple), une couche d'impression à base d'encres spéciales pour polyester ou d'encres cellulosiques, un revêtement de polyéthylène déposé ou non sur une couche d'impression, une couche de matage pour art graphique, une couche diazoïque pour reproduction de microfilms.

La présente invention convient tout particulièrement bien à l'obtention de films complexes constitués par un film polyester support (A) cristallin ou semi-cristallin et par un film de polyéthylène recouvrant éventuellement une couche d'impression. On sait qu'il est avantageux de mettre en place, sur les films polyester destinés à l'emballage, un film en polyéthylène pour leur conférer des propriétés de thermoscellage, d'imperméabilité aux gaz ou pour protéger la couche d'impression. La liaison du film polyéthylène au film support et, le cas échéant, à la couche d'impression est réalisée au moyen de colles bien connues de l'homme de métier. On a constaté que les mélanges binaires conformes à l'invention améliorent la liaison film polyester support/film polyéthylène. Le recours aux films composites selon l'invention se révèle particulièrement avantageux pour l'obtention de films complexes pour emballage comportant à la fois une couche d'impression et un film polyéthylène car la couche de mélange binaire à base de copolyester sulfoné améliore à la fois l'adhérence de la couche d'impression et du film polyéthylène au film support.

Le procédé selon la présente invention présente l'avantage de permettre d'ajuster la rugosité de la (ou des) couches(s) (B) à volonté par le choix de la teneur, de la nature et de la granulométrie des charges incorporées dans le polyester (a) et par le choix de la proportion de polyester (a) dans le mélange binaire.

Par ailleurs, compte-tenu de la composition du mélange binaire (présence notable de polyester cristallin), et de l'épaisseur respectives des couches (A) et (B), il est possible sans préjudice pour la qualité du film de recycler jusqu'à 30 % des mélanges obtenus par fusion des déchets des films composites dans le polyester constituant la couche (A).

Les exemples suivants illustrent l'invention et montrent comment elle peut être mise en pratique. Dans ces exemples les polyesters cristallins ou cristallisables seront désignés par (a) et les copolyesters sulfonés par (b). Les tests suivants seront utilisés :

1°) Test de collage du film sur lui-même

On détermine la température de collage du film au moyen d'un appareil de marque commerciale THERMOTEST - RHODIACETA. Cet appareil comporte une série de plots portés chacun à une température constante dans une gamme de 70 à 250°c. Pour mesurer la température de collage d'un film, on plaque ce dernier contre les plots de l'appareil pendant 1 mn sous une pression de 4KPa ± 1 KPa et on note la température du plot sur lequel se produit le collage du film sur lui-même (cf. norme NF G 07-063 de décembre 1979).

2°) Tests d'adhérence

A cet effet chaque film composite est revêtu sur la couche (B) d'un revêtement final par couchage manuel au moyen d'un appareil de marque commerciale HAND COATER dont la barre gravée d'enduction est choisie pour déposer 6 g de composition par $m^2$ de film. Le film enduit est séché en étuve ventilée pendant 1 minute à 150°C et stocké pendant 24 heures avant d'être soumis aux tests d'adhérence suivants.

Sur chacun des films enduits on procède à des essais d'arrachage du revêtement au moyen d'un ruban adhésif de marque commerciale MAGIC TAPE n° 810 de la Société MINNESOTA MINING MANUFACTURING. La pose du ruban est manuelle et l'arrachage se fait dans des conditions de sévérité croissante :

a) arrachage lent
b) arrachage rapide
c) arrachage avec scarification préalable du revêtement final au moyen d'une lame de rasoir.
d) arrachage avec froissage préalable du film.

Pour chaque cas, la résistance à l'arrachage est notée de 1 (arrachage total aisé) à 10 (tenue parfaite du revêtement). Enfin une note globale de 1 à 10, tenant compte des notes attribuées pour chacune des conditions a) à d) donne une évaluation générale de la résistance à l'arrachage des revêtements finals pour chacun des tests.

Les tests suivants ont été utilisés :

Test 8

On applique sur le film composite un enduit de matage pour art graphique à base d'alcool polyvinylique réticulé à chaud dans un solvant eau/alcool.

Test 10

On applique un enduit maté diazoïque à base d'acétopropionate de cellulose non réticulé en solution dans l'alcool.

Test 3

On applique sur le film composite un enduit diazoïque pour reproduction de microfilms en milieu cétonique.

3° Test d'imprimabilité

On dépose sur le film composite au moyen d'une machine d'impression à cylindre gravé comme décrit précédemment différents types d'encres. Les films encrés sont ensuite séchés 2 mn à 120°C et soumis aux essais d'arrachage décrits précédemment.

Test 1

On applique sur la (ou les) couche(s) B du film composite une encre vendue sous la marque commerciale TERPLEX par la Société SICPA.

Test 2

On applique une encre pour flexogravure vendue sous la marque commerciale POLYPLEX par la Société INMONT SA.

Test 3

On applique une encre nitrocellulosique pour hélio et flexogravure vendue sous la marque commerciale CTSW par la Société LORILLEUX.

4°) Tests de complexage

ON dépose sur la couche (ou les couches) B d'un film composite, sur machine industrielle et à partir de bobines de 400 mm de large, un film de polyéthylène de 60 micromètres d'épaisseur. La liaison film polyester composite/polyéthylène est assurée au moyen de diverses colles. On mesure ensuite les forces de délaminage sur des éprouvettes de 15 mm de large dans le sens transversal (T) et dans le sens longitudinal (L). On a fait appel aux colles suivantes :

Test 1

Colle vendue sous la marque commerciale ADCOTE 301/550 par la Société MORTON.

Test 2

Colle vendue sous la marque commerciale LIAFOL 2850/5000 par la Société HENKEL.

Test 3

Colle vendue sous la marque WIKOLIN 691A/691C.
Dans les exemples ci-après on a fait appel aux polyesters et copolyesters suivants :

1°) Polyesters cristallisables (a)

Référence (a1)

Il s'agit d'un polytéréphtalate d'éthylèneglycol contenant 3,8 % en mole de diéthylèneglycol et présentant un indice de viscosité de 740 mesurée à 25 % C dans l'orthochlorophénol.

Référence (a2)

Il s'agit du PET (a1) contenant 0,35 % en poids de particules de carbonate de calcium de diamètre médian en volume égal à 0,9 micromètre.

Référence (a3)

Il s'agit du PET (a1) contenant 1 % en poids de particules de silice de marque commerciale SYLOID 3153 de diamètre médian en volume égal à 1,48 micromètre.

Référence (a4)

Il s'agit du PET (a1) contenant 0,35 % en poids de kaolinite de diamètre médian en volume égal à 1,3 micromètres.

2°) Polyesters sulfonés (b)

Référence (b1)

Ce copolyester a été préparé de la façon suivante :

Selon les procédés connus on prépare tout d'abord un prépolycondensat par réaction entre l'acide isophtalique, l'acide sulfo-5 isophtalique et l'éthylèneglycol en présence d'acétate de sodium utilisé comme catalyseur ; l'estérification est effectuée sous pression atmosphérique jusqu'à 220° C puis prépolymérisation jusqu'à 240° C.

On prépare également un autre prépolycondensat à partir de téréphtalate de diméthyle et d'éthylène glycol en présence d'acétate de manganèse ; l'interéchange est poursuivi sous pression atmosphérique jusqu'à 225° C. Après addition d'un stabilisant phosphoré et de trioxyde d'antimoine ce prépolycondensat est mélangé avec le prépolycondensat décrit dans le paragraphe précédent ; le mélange est chauffé jusqu'à 275° la pression étant progressivement réduite jusqu'à 0,5 torr.

Le copolyester obtenu est ensuite coulé et granulé. Il présente les caractéristiques suivantes :

. teneur en acide isophtalique dans le mélange acide téréphtalique (AT)/acide isophtalique (AI) en moles % : 60.
. taux d'acide sulfo-5 isophtalique (ASI) en moles pour 100 moles de diacides aromatiques non sulfonés (AT / AI) : 16,2 %
. teneur pondérale en diéthylèneglycol (DEG) : 15 %

Référence (b2) à (b7)

En opérant comme précédemment on a préparé divers copolyesters sulfonés à motifs récurrents AT/AI/ASI/éthylèneglycol/oligomères de l'éthylèneglycol présentant les caractéritiques suivantes :

| Référence copolyester sulfoné | AT % en moles | AI % en moles | ASI % en moles | DEG % en poids |
|---|---|---|---|---|
| b2 | 40 | 60 | 14 | 14 |
| b3 | 80 | 20 | 14 | 14 |
| b4 | 100 | 0 | 14 | 14 |
| b5 | 90 | 10 | 7 | 4,1 |
| b6 | 70 | 30 | 7 | 12 |
| b7 | 95 | 5 | 7 | 2,9 |

Les films composites sont préparés par coextrusion d'un film de polyester (a) et du mélange a/b. La ligne principale d'extrusion de la couche (A) travaille à 275° C et la ligne satellite d'extrusion de la couche (B) à temperature inférieure à 275° C.

Les mélanges de polyesters a/b ont été obtenus de la façon suivante : les polyesters utilisés comme constituant de la couche (A) et comme composant (a) du mélange ternaire sont séchés à 160° C pour éliminer toute trace d'humidité. Les copolyesters sont étuvés sous air déshydraté. Les deux composants, sous forme particulaire, sont conservés et alimentés dans les proportions choisies sous atmosphère d'un gaz inerte, dans l'extrudeuse à vis de la ligne satellite d'extrusion.

Il est entendu que dans les exemples ci-après les teneurs en motifs récurrents dérivés des acides téréphtalique et isophtalique des mélanges M de polyester (a) et de copolyester sulfoné (b) exprimées en

moles % sont rapportées au total des motifs récurrents AT et AI présents dans le mélange M ; la teneur en motifs récurrents dérivés de l'acide sulfo-5 isophtalique (ASI) exprimée en moles % est rapportée au total des motifs récurrents AT, AI et ASI présents dans le mélange M ; la teneur pondérale en DEG est rapportée à 100 parties en poids de mélange.

Exemple 1

On prépare un film composite F1 biétiré comportant trois couches B/A/B par coextrusion d'une part du polytéréphtalate (a1) décrit précédemment et d'autre part d'un mélange M1 contenant 50 % en poids de PET (a1) et 50 % en poids du copolyester sulfoné (b1). Les couches (B) situées de part et d'autre de la couche (A) sont identiques et ont une épaisseur de 1,5 micromètre. L'épaisseur totale du film est de 50 micromètre. Le mélange M1 constituant les couches B a la composition suivante :

- teneur en ASI % en moles : 8
- teneur en DEG % en poids : 7
- teneur en AT % en moles : 70
- teneur en AI % en moles : 30

Le film composite F1 a été obtenu sans difficulté et présente un aspect de surface normal. On l'a soumis aux tests suivants :

1°) Test de collage

Le film F1 présente au test décrit ci-avant une température de collage de 130° C.

2°) Tests d'adhérence

Test 8 : cotation globale : 9
Test 10 : cotation globale : 7

A titre comparatif on a tenté de préparer un film composite analogue au film F1 mais en remplaçant le mélange M1 par le copolymère sulfoné (b1). En raison de la basse température de collage (80° C) de (b1) il a été difficile d'obtenir un film composite de manière industrielle.

Exemple 2

En opérant comme à l'exemple 1, on a préparé un film composite F2 comportant 3 couches B/A/B présentant une épaisseur totale de 50 micromètre ; les couches (B) ont une épaisseur de 1,5 micromètre. La couche (A) est constituée par du PET (a1) et les couches (B) par un mélange M2 à 50/50 % en poids de (a1) et de copolyester sulfoné (b2). Le mélange M2 présente les caractéristiques suivantes :

- teneur en ASI % en moles : 7
- teneur en AT % en moles : 70
- teneur en AI % en moles : 30
- teneur en DEG % en poids : 7

Le film F2 a été obtenu sans difficulté et présente un aspect de surface normal et une bonne liaison des couches (B) avec la couche (A).

Le film F2 a été soumis aux tests suivants :

a) Test de collage
F2 présente une température de collage de 100° C.

b) Tests d'adhésion
Test 3 : cotation globale : 10
Test 8 : cotation globale : 10
Test 10 : cotation globale : 7

A titre comparatif on a tenté de préparer un film composite F'2 en remplaçcant le mélange M2 par le copolyester sulfoné (b2) pur. Le film F'2 n'a pu être obtenu.

Exemple 3

En opérant comme à l'exemple 1, on a préparé un film composite F3 de 50 micromètres d'épaisseur après avoir remplacé le mélange M1 par un mélange M3 contenant 50 % en poids de PET (a1) et 50 % en poids de copolyester sulfoné (b3). M3 présente les caractéristiques suivantes :

- teneur en ASI % en moles : 7
- teneur en DEG % en poids : 7
- teneur en AT % en moles : 90
- teneur en AI % en moles : 10

Le film F3 a été obtenu sans difficulté et présente un aspect de surface normal. Il a été soumis aux tests suivants :

a) Test de collage : 120 °C

b) Tests d'adhérence :

Test 3 : cotation globale : 10

Test 8 : cotation globale : 10

Test 10 : cotation globale : 9

Essais comparatifs EC1 et EC2

A titre comparatif, on a préparé deux films composites F'3 et F"3 après avoir remplacé le mélange M3 respectivement par le copolyester sulfoné (b3) et par le copolyester sulfoné (b5). Les films F'3 et F"3 ont été soumis à tout ou partie des tests appliqués à F3. Les résultats suivants ont été obtenus :

| Essais comparatifs | EC1 | EC2 |
|---|---|---|
| Films | F'3 | F"3 |
| Test de collage °C | 70 | 100 |
| Tests d'adhérence | | |
| T8 | 8 | 10 |
| T10 | 10 | 3 |

La comparaison des résultats des tests de F3 et F'3 montre que l'addition de (a1) à (b3) se traduit par une élévation notable de la température de collage sans perte des propriétés d'adhérence.

La comparaison des résultats des tests de F3 et F"3 fait ressortir que la substitution à un copolyester sulfoné pur d'un mélange polyester cristallisable/copolyester sulfoné de teneur en AT, AI, et ASI identique à celle du copolyester sulfoné pur se traduit par une augmentation de la température de collage et une amélioration de l'adhérence selon le test 10.

Exemple 4

En opérant comme à l'exemple 1, on a préparé un film composite F4 de 40 micromètres d'épaisseur totale après avoir remplacé le mélange M1 par un mélange M4 contenant 50 % en poids de PET (a1) et 50 % en poids du copolymère sulfoné (b4). Le mélange M4 présente la composition suivante :

- teneur en ASI % en moles : 7
- teneur en DEG % en poids : 7
- teneur en AT % en moles : 100
- teneur en AI % en moles : 0

Le film M4 a été obtenu sans difficulté et présente un aspect de surface normal. Il a été soumis aux tests suivants :

a) Test de collage : 160 °C

b) Tests d'adhérence :

Test 3 : cotation globale : 10

Test 8 : cotation globale : 7

Test 10 : cotation globale : 10

A titre comparatif, on a tenté de préparer sans succès un film composite par coextrusion du PET (a1) et du copolyester (b4) pur.

Exemple 5

En opérant comme à l'exemple 1, on a préparé un film composite F5 de 50 micromètres d'épaisseur par coextrusion du PET (a1) et d'un mélange M5 constitué de 50 % en poids de PET (a1) et de 50 % en poids de copolyester sulfoné (b6). Le mélange M5 a la composition suivante :

- teneur en ASI % en moles : 3,5
- teneur en DEG % en poids : 6
- teneur en AT % en moles : 85
- teneur en AI % en moles : 15

Le film F5 ainsi obtenu présente un bon aspect de surface. Il a été soumis aux test suivants :

a) Test de collage : 140° C

b) Tests d'adhérence :

Tests 3 : cotation globale : 9

Test 8 : cotation globale : 9

Test 10 : cotation globale : 8

L'obtention d'un composite PET (a1)/copolyester sulfoné (b6) pur n'a pas été possible en raison du caractère collant du film à l'état amorphe.

A titre comparatif, on a préparé deux films composites F'5 et F"5 de 50 mm d'épaisseur par coextrusion de PET (a1) et de mélanges M'5 de 75 % en poids de (a1) et de 25 % en poids de (b6) et M"5, de 25 % en poids de (a1) et de 75 % en poids de (b6). M'5 et M"5 présentent les caractéristiques suivantes :

| | M'5 | M"5 |
|---|---|---|
| - teneur en ASI % en moles | 2 | 5,25 |
| - teneur en DEG % en poids | 3 | 9 |
| - teneur en AT % en moles | 92,5 | 77,5 |
| - teneur en AI % en moles | 7,5 | 22,5 |
| - température de collage | 160 | 90 |
| - adhérence : | | |
| Test 3 | 1 | 8 |
| Test 8 | 2 | 10 |
| Test 10 | 7 | 10 |

En comparant le film M'5 au film M5, on constate que l'adjonction d'une quantité trop importante de (a1) à (b6) se traduit par une baisse importante des propriétés d'adhérence, alors que l'addition d'une quantité trop faible de (a1) à (b6), si elle permet de conserver une bonne adhérence ne permet pas de relever suffisamment le point de collage du film composite M"5.

Exemple 6

En opérant comme à l'exemple 1, on a préparé un film composite F6 de 50 micromètres d'épaisseur par coextrusion :

a) du PET (a1)

b) d'un mélange M6 contenant 50 % en poids de (a2) et 50 % en poids de (b7). Le mélange (M6) présente les caractéristiques suivantes :

- teneur en ASI % en moles : 3,5
- teneur en DEG % en poids : 1,5
- teneur en AT % en moles : 97,5

- teneur en AI % en moles : 2,5

Le film composite F6 a été obtenu sans difficulté. Il a été soumis aux test d'adhérence 8 et 10 pour lesquels les cotations globales de respectivement 8 et 10 ont été obtenues.

Exemple 7

On a préparé un film composite F7 en opérant comme à l'exemple 6 mais après avoir remplacé, toutes choses étant égales par ailleurs, dans le mélange M6 le PET (a2) par le PET (a3) chargé.

On a obtenu sans difficulté un film composite de 50 micromètres d'épaisseur comprenant une couche A exempte de charge et deux couches externes B chargées de 2,5 micromètres d'épaisseur. Soumis aux tests d'adhérence 1 et 2 le film F7 a obtenu les cotations globales 7 et 9.

Exemple 8

On a préparé un film composite F8 de 50 micromètres d'épaisseur par coextrusion du PET (a1) de l'exemple 6 et d'un mélange M8 de 50 % en poids de PET (a2) et de 50 % en poids de copolyester sulfoné (b5). Le mélange M8 présente les caractéristiques suivantes :

- teneur en ASI % en moles : 3,5
- teneur en DEG % en poids : 2
- teneur en AT % en moles : 95
- teneur en AI % en moles : 5

Le film obtenu sans difficulté présente eux tests d'adhérence 1 et 2 les cotations globales suivants : 8 et 9.

Exemple 9

On a préparé un film composite F9 de 50 micromètres d'épaisseur comprenant trois couches B/A/B/ par coextrusion :

a) du PET (a1) de l'exemple 1

b) d'un mélange M9 à 50 % en poids du PET (a3) de l'exemple 7 et à 50 % en volume du copolyester sulfoné (b3).

Le film F9 obtenu sans difficulté présente une température de collage supérieure à 140° C et des cotations globales de 9 aux test d'adhérence 8 et 10.

Exemple 10

On a préparé un film composite F10 de 12 micromètres d'épaisseur comportant une couche externe B de 1 micromètre d'épaisseur et une couche A par coextrusion du PET (a4) et d'un mélange M10 contenant 75 % en poids de PET (a1) et 25 % en poids de copolyester sulfoné (b1). Le mélange présente les caractéristiques suivantes:

- teneur en ASI % en moles : 4,05
- teneur en DEG % en poids : 3,75
- teneur en AT % en moles : 85
- teneur en AI % en moles : 15

Le film F10 a été obtenu sans difficulté. Il a été soumis aux test suivants :

1°) Test de collage : 135° C

2°) Tests d'imprimabilité :

Test 1 : cotation globale : 10

Test 2 : cotation globale : 10

Test 3 : cotation globale : 10

3°) Tests de complexage

| | Force de délaminage en g | |
|---|---|---|
| | L | T |
| Test 1 | 330 | 320 |
| Test 2 | 330 | 300 |
| Test 3 | 380 | 360 |

**Revendications**

1. Procédé d'obtention de films polyester composites orientés, à adhérence améliorée vis-à-vis de revêtements finals d'application variés, constitués par un film support (A), d'un polyester cristallin ou semi-cristallin, comportant sur au moins une de ses faces une couche contigüe d'un revêtement primaire d'adhérence (B) à base d'un copolyester à groupes oxysulfonyles, par dépôt dudit revêtement par coextrusion caractérisé en ce que l'on fait appel pour la formation du revêtement primaire à un mélange binaire constitué par :
   a) un polyester cristallisable
   b) un copolyester comportant une pluralité de groupes oxysulfonyles dans lequel le nombre de motifs récurrents à groupes oxysulfonyles exprimé par rapport à 100 motifs récurrents de même nature est compris entre 3 et 20, les proportions des composants (a) et (b) dans le mélange étant telles que le nombre de motifs récurrents à groupes oxysulfonyles présents dans le mélange exprimé par rapport au nombre total de motifs récurrents de même nature soit compris entre 2 et 15 %.

2. Procédé selon la revendication 1, caractérisé en ce que le polyester cristallin, semi-cristallin ou cristallisable utilisé comme constituant de la couche (A) et composant (a) du mélange binaire est un homopolyester ou un copolyester de l'acide téréphtalique comportant au moins 80 % en moles de motifs téréphtalates.

3. Procédé selon la revendication 2, caractérisé en ce que le polyester cristallin, semi-cristallin ou cristallisable utilisé comme constituant de la couche (A) et composant (a) du mélange binaire est le polytéréphtalate d'éthylèneglycol.

4. Procédé selon l'une quelconque des revendications 1 à 3, caractérisé en ce que le copolyester utilisé comme constituant (b) du mélange binaire présente une pluralité de groupes oxysulfonyles de formule générale :

   $$(-SO_3)_nM \qquad (I)$$

   dans laquelle :

   - n est égal à 1 ou 2
   - M représente un atome d'hydrogène, un métal alcalin, un métal alcalino-terreux, un cation ammonium, un cation ammonium quaternaire.

5. Procédé selon l'une quelconque des revendications 1 à 4, caractérisé en ce que le copolyester sulfoné utilisé comme constituant (b) du mélange binaire présente une pluralité de motifs dérivés de diacides aromatiques ou leurs dérivés de formule :

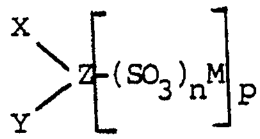

(II)

dans laquelle :

- n est égal à 1 ou 2 .
- M représente un atome d'hydrogène, un metal alcalin, un métal alcalino-terreux, un cation ammonium, un cation ammonium quaternaire ;
- Z est un radical aromatique polyvalent ;
- X et Y sont des radicaux hydroxycarbonyle ou dérivés : esters d'alcools aliphatiques inférieur ou halogénures d'acides (chlorure, bromure) ;
- p est un nombre entier égal à 1 ou 2.

**6.** Procédé selon l'une quelconque des revendications 1 à 5, caractérisé en ce que le copolyester sulfoné utilisé comme constituant (b) du mélange binaire présente une pluralité de motifs dérivés d'un acide hydroxysulfonylisophtalique.

**7.** Procédé selon l'une quelconque des revendications 1 à 6, caractérisé en ce que le copolyester sulfoné utilisé comme constituant (b) du mélange binaire présente en outre une pluralité de motifs dérivés de l'acide téréphtalique.

**8.** Procédé selon la revendication 7, caractérisé en ce que le copolyester sulfoné utilisé comme constituant (b) du mélange binaire présente à la fois une pluralité de motifs dérivés de l'acide téréphtalique et une pluralité de motifs dérivés de l'acide isophtalique.

**9.** Procédé selon la revendication 8, caractérisé en ce que dans le copolyester sulfoné, le nombre de motifs dérivés de l'acide isophtalique représente jusqu'à 70 % du total des motifs téréphtalate/isophtalate.

**10.** Procédé selon l'une quelconque des revendications 1 à 9, caractérisé en ce que le copolyester sulfoné utilisé comme constituant (b) du mélange binaire présente une pluralité de motifs dérivés de l'éthylèneglycol et/ou de ses oligomères de poids moléculaire inférieur à 600.

**11.** Procédé selon la revendication 10, caractérisé en ce que la teneur pondérale du copolyester sulfoné en motifs dérivés des oligomères de l'éthylèneglycol est comprise entre 2 et 30 %.

**12.** Procédé selon l'une quelconque des revendications 1 à 11, caractérisé en ce que le mélange binaire contient de 20 à 80 % en poids de copolyester sulfoné b) et de 80 à 20 % en poids de polyester cristallin, semi-cristallin ou cristallisable.

**13.** Procédé d'obtention de films composites selon l'une quelconque des revendications 1 à 12, caractérisé en ce qu'on procède à la coextrusion, dans une première filière linéaire, d'un polyester cristallisable en un film amorphe (A) et simultanément, par au moins une deuxième filière disposée parallèlement à la première, d'au moins un film (B) d'un mélange binaire a) b) déposé sur au moins une des faces du film (A) puis procède au refroidissement, à l'étirage et à la thermofixation du film composite de façon connue.

**14.** Films polyester composites orientés, à adhérence améliorée vis-à-vis de revêtements finals d'application variés, obtenus par le procédé selon l'une quelconque des revendications 1 à 13, constitués par un film support (A) d'un polyester cristallin ou semi-cristallin comportant sur au moins une de ses faces une couche contigüe d'un revêtement primaire adhérence (B), à base d'un copolyester à groupes oxysulfonyles caractérisés en ce que la couche (B) est constituée par un mélange binaire comprenant :

a) un polyester cristallin ou semi-cristallin

b) un copolyester comportant une pluralité de groupes oxysulfonyles dans lequel le nombre de motifs récurrents à groupes oxysulfonyles exprimé par rapport à 100 motifs récurrents de même nature est compris entre 3 et 20, les proportions des composants (a) et (b) dans le mélange étant

telles que le nombre de motifs récurrents à groupes oxysulfonyles présents dans le mélange exprimé par rapport au nombre total de motifs récurrents de même nature soit compris entre 2 et 15 %.

**15.** Films polyester composites orientés, à adhérence améliorée vis-à-vis de revêtements finals d'application variés, selon la revendication 14, caractérisées en ce que l'épaisseur totale du film est comprise dans un intervalle de 5 à 300 micromètres et l'épaisseur de la ou des couche(s) (B) dans un intervalle de 0,3 à 10 micromètres.

**16.** Films polyester composites orientés, à adhérence améliorée vis-à-vis de revêtements finals d'application variés, selon la revendication 14, caractérisés en ce qu'ils présentent une épaisseur totale supérieure à 40 micromètres et que le mélange binaire constituant la ou les couches (B) a une teneur en motifs récurrents à groupes oxysulfonyles exprimée par rapport au nombre de motifs récurrents de même nature présents dans le mélange supérieure ou égale à 3 %

**17.** Films composites complexes constitués par un film polyester orienté cristallin ou semi-cristallin support (A), comportant sur au moins une de ses faces, un revêtement final d'application déposé sur une couche (B) d'un revêtement primaire d'adhérence à base d'un copolyester sulfoné, caractérisés en ce que la couche (B) est constituée par un mélange binaire selon l'une quelconque des revendications 1 à 12.

**18.** Films composites complexes constitués par un film polyester orienté cristallin ou semi-cristallin support (A), selon l'une quelconque des revendications 14 à 17, comportant sur au moins une de ses faces, un revêtement final d'application, caractérisés en ce que le revêtement final d'application est pris dans le groupe formé par les revêtements diazoïques, les revêtements de matage, les couches d'impression.

**19.** Films composites complexes pour emballage constitués par un film polyester orienté cristallin ou semi-cristallin support (A) comportant sur au moins une de ses faces un film de polyéthylène déposé sur un revêtement primaire d'adhérence (B) à base d'un copolyester à groupes oxysulfonyles auquel il est lié au moyen d'un adhésif, caractérisés en ce que la couche (B) est constituée par un mélange binaire selon l'une quelconque des revendications 1 à 12.

**20.** Films complexes pour emballages selon la revendication 19, caractérisés en ce qu'ils comportent une couche d'impression entre la couche (B) et le film de polyéthylène.

Revendications pour les Etats contractants suivants : ES et GR

**1.** Procédé d'obtention de films polyester composites orientés, à adhérence améliorée vis-à-vis de revêtements finals d'application variés, constitués par un film support (A), d'un polyester cristallin ou semi-cristallin, comportant sur au moins une de ses faces une couche contigüe d'un revêtement primaire d'adhérence (B) à base d'un copolyester à groupes oxysulfonyles, par dépôt dudit revêtement par coextrusion caractérisé en ce que l'on fait appel pour la formation du revêtement primaire à un mélange binaire constitué par :
a) un polyester cristallisable
b) un copolyester comportant une pluralité de groupes oxysulfonyles dans lequel le nombre de motifs récurrents à groupes oxysulfonyles exprimé par rapport à 100 motifs récurrents de même nature est compris entre 3 et 20, les proportions des composants (a) et (b) dans le mélange étant telles que le nombre de motifs récurrents à groupes oxysulfonyles présents dans le mélange exprimé par rapport au nombre total de motifs récurrents de même nature soit compris entre 2 et 15 %.

**2.** Procédé selon la revendication 1, caractérisé en ce que le polyester cristallin, semi-cristallin ou cristallisable utilisé comme constituant de la couche (A) et composant (a) du mélange binaire est un homopolyester ou un copolyester de l'acide téréphtalique comportant au moins 80 % en moles de motifs téréphtalates.

**3.** Procédé selon la revendication 2, caractérisé en ce que le polyester cristallin, semi-cristallin ou cristallisable utilisé comme constituant de la couche (A) et composant (a) du mélange binaire est le

polytéréphtalate d'éthylèneglycol.

4. Procédé selon l'une quelconque des revendications 1 à 3, caractérisé en ce que le copolyester utilisé comme constituant (b) du mélange binaire présente une pluralité de groupes oxysulfonyles de formule générale :

$$(-SO_3)_nM \qquad (I)$$

dans laquelle :
- n est égal à 1 ou 2
- M représente un atome d'hydrogène, un métal alcalin, un métal alcalino-terreux, un cation ammonium, un cation ammonium quaternaire.

5. Procédé selon l'une quelconque des revendications 1 à 4, caractérisé en ce que le copolyester sulfoné utilisé comme constituant (b) du mélange binaire présente une pluralité de motifs dérivés de diacides aromatiques ou leurs dérivés de formule :

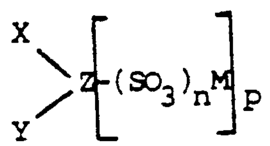

(II)

dans laquelle :
- n est égal à 1 ou 2 .
- M représente un atome d'hydrogène, un metal alcalin, un métal alcalino-terreux, un cation ammonium, un cation ammonium quaternaire ;
- Z est un radical aromatique polyvalent ;
- X et Y sont des radicaux hydroxycarbonyle ou dérivés : esters d'alcools aliphatiques inférieur ou halogénures d'acides (chlorure, bromure) ;
- p est un nombre entier égal à 1 ou 2.

6. Procédé selon l'une quelconque des revendications 1 à 5, caractérisé en ce que le copolyester sulfoné utilisé comme constituant (b) du mélange binaire présente une pluralité de motifs dérivés d'un acide hydroxysulfonylisophtalique.

7. Procédé selon l'une quelconque des revendications 1 à 6, caractérisé en ce que le copolyester sulfoné utilisé comme constituant (b) du mélange binaire présente en outre une pluralité de motifs dérivés de l'acide téréphtalique.

8. Procédé selon la revendication 7, caractérisé en ce que le copolyester sulfoné utilisé comme constituant (b) du mélange binaire présente à la fois une pluralité de motifs dérivés de l'acide téréphtalique et une pluralité de motifs dérivés de l'acide isophtalique.

9. Procédé selon la revendication 8, caractérisé en ce que dans le copolyester sulfoné, le nombre de motifs dérivés de l'acide isophtalique représente jusqu'à 70 % du total des motifs téréphtalate/isophtalate.

10. Procédé selon l'une quelconque des revendications 1 à 9, caractérisé en ce que le copolyester sulfoné utilisé comme constituant (b) du mélange binaire présente une pluralité de motifs dérivés de l'éthylèneglycol et/ou de ses oligomères de poids moléculaire inférieur à 600.

11. Procédé selon la revendication 10, caractérisé en ce que la teneur pondérale du copolyester sulfoné en motifs dérivés des oligomères de l'éthylèneglycol est comprise entre 2 et 30 %.

12. Procédé selon l'une quelconque des revendications 1 à 11, caractérisé en ce que le mélange binaire contient de 20 à 80 % en poids de copolyester sulfoné b) et de 80 à 20 % en poids de polyester

cristallin, semi-cristallin ou cristallisable.

**13.** Procédé d'obtention de films composites selon l'une quelconque des revendications 1 à 12, caractérisé en ce qu'on procède à la coextrusion, dans une première filière linéaire, d'un polyester cristallisable en un film amorphe (A) et simultanément, par au moins une deuxième filière disposée parallèlement à la première, d'au moins un film (B) d'un mélange binaire a) b) déposé sur au moins une des faces du film (A) puis procède au refroidissement, à l'étirage et à la thermofixation du film composite de façon connue.

## Claims

**1.** Process for the production of oriented composite polyester films having improved adhesiveness towards varied final application coatings, consisting of a crystalline or semicrystalline polyester support film (A), containing on at least one of its surfaces a contiguous layer of an oxysulphonyl group-containing copolyester-based adhesion primer coating (B), by depositing said coating by coextrusion, characterized in that a binary mixture consisting of the following is employed to produce the primer coating:

a) a crystallizable polyester and

b) a copolyester containing a plurality of oxysulphonyl groups in which the number of oxysulphonyl group-containing recurring units expressed relative to 100 recurring units of the same nature is between 3 and 20, the proportions of components (a) and (b) in the mixture being such that the number of oxysulphonyl group-containing recurring units present in the mixture, expressed relative to the total number of recurring units of the same nature, is between 2 and 15 %

**2.** Process according to Claim 1, characterized in that the crystalline, semicrystalline or crystallizable polyester employed as constituent of layer (A) and component (a) of the binary mixture is a homopolymer or a copolyester of terephthalic acid containing at least 80 mol% of terephthalic units.

**3.** Process according to Claim 2, characterized in that the crystalline, semicrystalline or crystallizable polyester employed as constituent of layer (A) and component (a) of the binary mixture is ethylene glycol polyterephthalate.

**4.** Process according to any one of Claims 1 to 3, characterized in that the copolyester employed as constituent (b) of the binary mixture has a plurality of oxysulphonyl groups of general formula: in which:

$$(-SO_3)_nM \qquad (I)$$

n is equal to 1 or 2 and

M represents a hydrogen atom, an alkali metal, an alkaline earth metal, an ammonium cation or a quaternary ammonium cation.

**5.** Process according to any one of Claims 1 to 4, characterized in that the sulphonated copolyester employed as constituent (b) of the binary mixture has a plurality of units derived from aromatic diacids or their derivatives of formula:

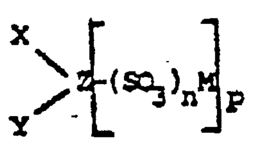

(II)

in which:

n is equal to 1 or 2.

M represents a hydrogen atom, an alkali metal, an alkaline earth metal, an ammonium cation or a quaternary ammonium cation;

Z is a polyvalent aromatic radical;
X and Y are hydroxycarbonyl radicals or derivatives; lower aliphatic alcohol esters or acid halides (chloride or bromide); and
p is an integer equal to 1 or 2.

6. Process according to any one of Claims 1 to 5, characterized in that the sulphonated copolyester employed as constituent (b) of the binary mixture has a plurality of units derived from a hydroxysulphonylisophthalic acid.

7. Process according to any one of Claims 1 to 6, characterized in that the sulphonated copolyester employed as constituent (b) of the binary mixture additionally has a plurality of units derived from terephthalic acid.

8. Process according to Claim 7, characterized in that the sulphonated copolyester employed as constituent (b) of the binary mixture has both a plurality of units derived from terephthalic acid and a plurality of units derived from isophthalic acid.

9. Process according to Claim 8, characterized in that in the sulphonated copolyester, the number of units derived from isophthalic acid represents up to 70 % of the total of the terephthalate/isophthalate units.

10. Process according to any one of Claims 1 to 9, characterized in that the sulphonated copolyester employed as constituent (b) of the binary mixture has a plurality of units derived from ethylene glycol and/or its oligomers having a molecular weight of less than 600.

11. Process according to Claim 10, characterized in that the content by weight of the units derived from ethylene glycol oligomers in the sulphonated copolyester is between 2 and 30 %.

12. Process according to any one of Claims 1 to 11, characterized in that the binary mixture contains from 20 to 80 % by weight of sulphonated copolyester b) and from 80 to 20 % by weight of crystalline, semicrystalline or crystallizable polyester.

13. Process for the production of composite films according to any one of Claims 1 to 12, characterized in that coextrusion is carried out, in a first linear die, of a polyester which can be crystallized into an amorphous film (A) and simultaneously, by at least a second die arranged parallel to the first, of at least one film (B) of a binary mixture a) b) deposited on at least one of the surfaces of the film (A) and that the composite film is then cooled, drawn and thermoset in a known manner.

14. Oriented composite polyester films having improved adhesiveness towards varied final application coatings, obtained by the process according to any one of Claims 1 to 13, consisting of a crystalline or semicrystalline polyester support film (A), containing on at least one of its surfaces a contiguous layer of an oxysulphonyl group-containing copolyester-based adhesion primer coating (B), characterized in that the layer B consists of a binary mixture containing:
a) a crystalline or semicrystalline polyester and
b) a copolyester containing a plurality of oxysulphonyl groups in which the number of oxysulphonyl group-containing recurring units expressed relative to 100 recurring units of the same nature is between 3 and 20, the proportions of components (a) and (b) in the mixture being such that the number of oxysulphonyl group-containing recurring units present in the mixture, expressed relative to the total number of recurring units of the same nature, is between 2 and 15 %.

15. Oriented composite polyester films having improved adhesiveness towards varied final application coatings, according to Claim 14, characterized in that the total thickness of the film is within a range from 5 to 300 micrometres and the thickness of layer(s) (B) is within a range from 0.3 to 10 micrometres.

16. Oriented composite polyester films having improved adhesiveness towards varied final application coatings, according to Claim 14, characterized in that they have a total thickness greater than 40 micrometres and that the binary mixture forming layer(s) (B) has a content of oxysulphonyl group-containing recurring units, expressed relative to the number of recurring units of the same nature

present in the mixture, which is greater than or equal to 3 %.

17. Complex composite films consisting of a crystalline or semicrystalline oriented polyester support film (A), containing, on at least one of its surfaces, a final application coating deposited on a layer (B) of a sulphonated copolyester-based adhesion primer coating, characterized in that the layer (B) consists of a binary mixture according to any one of Claims 1 to 12.

18. Complex composite films consisting of a crystalline or semicrystalline oriented polyester support film (A), according to any one of Claims 14 to 17, containing on at least one of its surfaces a final application coating, characterized in that the final application coating is chosen from the group consisting of diazo coatings, matt coatings and printing layers.

19. Complex composite films for packaging consisting of a crystalline or semicrystalline oriented polyester support film (A) containing on at least one of its surfaces a polyethylene film deposited on an oxysulphonyl group-containing copolyester-based adhesion primer coating (B) to which it is bonded using an adhesive, characterized in that the layer (B) consists of a binary mixture according to any one of Claims 1 to 12.

20. Complex films for packagings according to Claim 19, characterized in that they contain a printing layer between layer (B) and the polyethylene film.

Claims for the following contracting states: ES and GR.

1. Process for the production of oriented composite polyester films having improved adhesiveness towards varied final application coatings, consisting of a crystalline or semicrystalline polyester support film (A), containing on at least one of its surfaces a contiguous layer of an oxysulphonyl group-containing copolyester-based adhesion primer coating (B), by depositing said coating by coextrusion, characterized in that a binary mixture consisting of the following is employed to produce the primer coating:
   a) a crystallizable polyester and
   b) a copolyester containing a plurality of oxysulphonyl groups in which the number of oxysulphonyl group-containing recurring units expressed relative to 100 recurring units of the same nature is between 3 and 20, the proportions of components (a) and (b) in the mixture being such that the number of oxysulphonyl group-containing recurring units present in the mixture, expressed relative to the total number of recurring units of the same nature, is between 2 and 15 %.

2. Process according to Claim 1, characterized in that the crystalline, semicrystalline or crystallizable polyester employed as constituent of layer (A) and component (a) of the binary mixture is a homopolymer or a copolyester of terephthalic acid containing at least 80 mol% of terephthalic units.

3. Process according to Claim 2, characterized in that the crystalline, semicrystalline or crystallizable polyester employed as constituent of layer (A) and component (a) of the binary mixture is ethylene glycol polyterephthalate.

4. Process according to any one of Claims 1 to 3, characterized in that the copolyester employed as constituent (b) of the binary mixture has a plurality of oxysulphonyl groups of general formula:

$$(-SO_3)_nM \qquad (I)$$

in which:
   n is equal to 1 or 2 and
   M represents a hydrogen atom, an alkali metal, an alkaline earth metal, an ammonium cation or a quaternary ammonium cation.

5. Process according to any one of Claims 1 to 4, characterized in that the sulphonated copolyester employed as constituent (b) of the binary mixture has a plurality of units derived from aromatic diacids or their derivatives of formula:

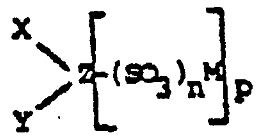

(II)

in which:

n is equal to 1 or 2.

M represents a hydrogen atom, an alkali metal, an alkaline earth metal, an ammonium cation or a quaternary ammonium cation;

Z is a polyvalent aromatic radical;

X and Y are hydroxycarbonyl radicals or derivatives; lower aliphatic alcohol esters or acid halides (chloride or bromide); and

p is an integer equal to 1 or 2.

**6.** Process according to any one of Claims 1 to 5, characterized in that the sulphonated copolyester employed as constituent (b) of the binary mixture has a plurality of units derived from a hydroxysulphonylisophthalic acid.

**7.** Process according to any one of Claims 1 to 6, characterized in that the sulphonated copolyester employed as constituent (b) of the binary mixture additionally has a plurality of units derived from terephthalic acid.

**8.** Process according to Claim 7, characterized in that the sulphonated copolyester employed as constituent (b) of the binary mixture has both a plurality of units derived from terephthalic acid and a plurality of units derived from isophthalic acid.

**9.** Process according to Claim 8, characterized in that in the sulphonated copolyester, the number of units derived from isophthalic acid represents up to 70 % of the total of the terephthalate/isophthalate units.

**10.** Process according to any one of Claims 1 to 9, characterized in that the sulphonated copolyester employed as constituent (b) of the binary mixture has a plurality of units derived from ethylene glycol and/or its oligomers having a molecular weight of less than 600.

**11.** Process according to Claim 10, characterized in that the content by weight of the units derived from ethylene glycol oligomers in the sulphonated copolyester is between 2 and 30 %.

**12.** Process according to any one of Claims 1 to 11, characterized in that the binary mixture contains from 20 to 80 % by weight of sulphonated copolyester b) and from 80 to 20 % by weight of crystalline, semicrystalline or crystallizable polyester.

**13.** Process for the production of composite films according to any one of Claims 1 to 12, characterized in that coextrusion is carried out, in a first linear die, of a polyester which can be crystallized into an amorphous film (A) and simultaneously, by at least a second die arranged parallel to the first, of at least one film (B) of a binary mixture a) b) deposited on at least one of the surfaces of the film (A) and that the composite film is then cooled, drawn and thermoset in a known manner.

## Ansprüche

**1.** Verfahren zur Herstellung von orientierten zusammengesetzten Polyesterfilmen mit verbessertem Haftvermögen gegenüber verschiedenen Endanwendungsüberzügen, bestehend aus einem Trägerfilm (A), einem kristallinen oder teilkristallinen Polyester, der auf wenigstens einer seiner Flächen eine angrenzende Schicht eines Haftgrundierungsüberzuges (B) auf Basis eines Copolyesters mit Oxysulfonylgruppen trägt, durch Absetzung dieses Überzugs durch Coextrusion,

**dadurch gekennzeichnet,**

daß man zur Bildung des Grundierungsüberzugs ein binäres Gemisch verwendet, bestehend aus:

a) einem kristallisierbaren Polyester,

b) einem Copolyester mit einer Vielzahl von Oxysulfonylgruppen, worin die Zahl der wiederkehrenden Einheiten mit Oxysulfonylgruppen ausgedrückt in bezug auf 100 wiederkehrende Einheiten der gleichen Natur zwischen 3 und 20 beträgt, wobei die Mengenverhältnisse der Bestandteile (a) und (b) in dem Gemisch derart sind, daß die Zahl der wiederkehrenden Einheiten mit Oxysulfonylgruppen, die in dem Gemisch vorhanden sind, ausgedrückt in bezug auf die Gesamtzahl der wiederkehrenden Einheiten der gleichen Natur, zwischen 2 und 15 % ist.

**2.** Verfahren gemäß Anspruch 1, dadurch gekennzeichnet, daß der kristalline, teilkristalline oder kristallisierbare Polyester, der als Bestandteil der Schicht (A) und als Bestandteil (a) des binären Gemisches verwendet wird, ein Homopolyester oder ein copolyester der Terephthalsäure ist mit mindestens 80 Mol-% Terephthalateinheiten.

**3.** Verfahren nach Anspruch 2, dadurch gekennzeichnet, daß der kristalline, teilkristalline oder kristallisierbare Polyester, der als Bestandteil der Schicht (A) und Bestandteil (a) des binären Gemisches verwendet wird, Polyethylenglykolterephthalat ist.

**4.** Verfahren gemäß einem der Ansprüche 1 bis 3, dadurch gekennzeichnet, daß der als Bestandteil (b) verwendete Copolyester des binären Gemisches eine Vielzahl von Oxysulfonylgruppen der allgemeinen Formel

$$(-SO_3)_nM \qquad (I)$$

aufweist, worin
- n gleich 1 oder 2
- M ein Wasserstoffstom, ein Alkalimetall, ein Erdalkalimetall, ein Ammoniumkation, ein quaternäres Ammoniumkation bedeutet.

**5.** Verfahren gemäß einem der Ansprüche 1 bis 4, dadurch gekennzeichnet, daß der sulfonierte copolyester, der als Bestandteil (b) des binären Gemisches verwendet wird, eine Vielzahl von Einheiten, abgeleitet von aromatischen Disäuren oder ihren Derivaten, aufweist, der Formel

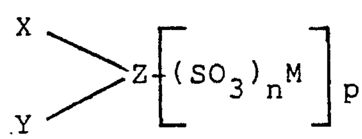

(II)

worin:
- n gleich 1 oder 2 ist
- M ein Wasserstoffatom, ein Alkalimetallatom, ein Erdalkalimetallatom, ein Ammoniumkation, ein quaternäres Ammoniumkation bedeutet
- Z ein mehrwertiger aromatischer Rest ist
- x und Y Hydroxycarbonylreste sind oder Derivate: Ester niedriger aliphatischer Alkohole oder Säurehalogenide (Chlorid, Bromid);
- p eine ganze Zahl von 1 oder 2 ist.

**6.** Verfahren gemäß einem der Ansprüche 1 bis 5, dadurch gekennzeichnet, daß der als Bestandteil (b) des binären Gemisches verwendete sulfonierte Copolyester eine Vielzahl von Einheiten, abgeleitet von einer Hydroxysulfonylisophthalsäure, aufweist.

**7.** Verfahren gemäß einem der Ansprüche 1 bis 6, dadurch gekennzeichnet, daß der als Bestandteil (b) des binären Gemisches verwendete sulfonierte Copolyester außerdem eine Vielzahl von Einheiten, abgeleitet von der Terephthalsäure, aufweist.

**8.** Verfahren gemäß Anspruch 7, dadurch gekennzeichnet, daß der als Bestandteil (b) des binären

Gemisches verwendete sulfonierte Copolyester gleichzeitig eine Vielzahl von Einheiten, abgeleitet von der Terephthalsäure, und eine Vielzahl von Einheiten, abgeleitet von der Isophthalsäure, aufweist.

**9.** Verfahren gemäß Anspruch 8, dadurch gekennzeichnet, daß in dem sulfonierten Copolyester die Anzahl der Einheiten, abgeleitet von der Isophthalsäure, bis zu 70 % der Gesamtheit der Einheiten Terephthalat/Isophthalat beträgt.

**10.** Verfahren gemäß einem der Ansprüche 1 bis 9, dadurch gekennzeichnet, daß der als Bestandteil (b) des binären Gemisches verwendete sulfonierte Copolyester eine Vielzahl von Einheiten, abgeleitet von Ethylenglykol und/ oder seinen Oligomeren mit einem Molekulargewicht unter 600, aufweist.

**11.** Verfahren gemäß Anspruch 10, dadurch gekennzeichnet, daß der Gewichtsgehalt des sulfonierten Copolyesters an Einheiten, abgeleitet von den Oligomeren des Ethylenglykols, zwischen 2 und 30 % beträgt.

**12.** Verfahren gemäß einem der Ansprüche 1 bis 11, dadurch gekennzeichnet, daß das binäre Gemisch 20 bis 80 Gew.-% an sulfoniertem Copolyester (b) und 80 bis 20 Gew.-% an kristallinem, teilkristallinem oder kristallisierbarem Polyester enthält.

**13.** Verfahren zur Herstellung von zusammengesetzten Filmen gemäß einem der Ansprüche 1 bis 12, dadurch gekennzeichnet, daß man eine Coextrusion eines kristallisierbaren Polyesters in einer ersten linearen Spinndüse zu einem amorphen Film (A) durchführt und gleichzeitig durch mindestens eine zweite,parallel zur ersten angeordnete Spinndüse mindestens einen Film (B) eines binären Gemisches a) b) auf wenigstens eine der Flächen des Films (A) absetzt, und dann eine Abkühlung, Verstreckung und Thermofixierung des zusammengesetzten Films auf bekannte Weise durchführt.

**14.** Orientierte zusammengesetzte Polyesterfilme mit verbesserter Haftfähigkeit gegenüber verschiedenen Endanwendungsüberzügen, erhalten nach einem der Ansprüche 1 bis 13, bestehend aus einem Trägerfilm (A) eines kristallinen oder teilkristallinen Polyesters, der auf mindestens einer seiner Flächen eine benachbarte Schicht eines Haftgrundierungsüberzugs (B) trägt, auf Basis eines Copolyesters mit Oxysulfonylgruppen, dadurch gekennzeichnet, daß die Schicht (B) aus einem binären Gemisch besteht, umfassend:

a) einen kristallinen oder teilkristallinen Polyester,

b) einen Copolyester mit einer Vielzahl von Oxysulfonylgruppen, worin die Zahl der wiederkehrenden Einheiten mit Oxysulfonylgruppen, ausgedrückt in bezug auf 100 wiederkehrende Einheiten der gleichen Natur, zwischen 3 und 20 liegt, wobei die Mengenverhältnisse der Bestandteile a) und b) in dem Gemisch derart sind, daß die Zahl der wiederkehrenden Einheiten mit Oxysulfonylgruppen, die in dem Gemisch vorhanden sind, ausgedrückt in bezug auf die Gesamtzahl der wiederkehrenden Einheiten gleicher Natur, zwischen 2 und 15 % beträgt.

**15.** Orientierte zusammengesetzte Polyesterfilme mit verbesserter Haftfähigkeit gegenüber verschiedenen Endanwendungsüberzügen gemäß Anspruch 14, dadurch gekennzeichnet, daß die Gesamtdicke des Films in einem Bereich von 5 bis 300 µm liegt und die Dicke der Schicht(en) (B) in dem Bereich von 0,3 bis 10 µm liegt.

**16.** Orientierte zusammengesetzte Polyesterfilme mit verbesserter Haftfähigkeit gegenüber verschiedenen Endanwendungsüberzügen gemäß Anspruch 14, dadurch gekennzeichnet, daß sie eine Gesamtdicke über 40 µm aufweisen und daß das binäre Gemisch, das die Schicht(en) (B) darstellt, einen Gehalt an wiederkehrenden Einheiten mit Oxysulfonylgruppen, ausgedrückt in bezug auf die Zahl der wiederkehrenden Einheiten gleicher Natur, die in dem Gemisch vorhanden sind, höher oder gleich 3 % beträgt.

**17.** Komplexe zusammengesetzte Filme, bestehend aus einem kristallinen oder teilkristallinen orientierten Polyesterträgerfilm (A), der auf mindestens einer seiner Flächen einen Endanwendungsüberzug, abgelagert auf einer Schicht (B) trägt, eines Haftgrundierungsüberzugs auf Basis eines sulfonierten Copolyesters, dadurch gekennzeichnet, daß die Schicht (B) aus einem binären Gemisch gemäß einem der Ansprüche 1 bis 12 besteht.

**18.** Komplexe zusammengesetzte Filme, bestehend aus einem orientierten kristallinen oder teilkristallinen

Polyesterträgerfilm (A) gemäß einem der Ansprüche 14 bis 17, der auf mindestens einer seiner Seiten einen Endanwendungsüberzug trägt, dadurch gekennzeichnet, daß der Endanwendungsüberzug ausgewählt ist aus der Gruppe, gebildet durch die Diazoüberzüge, Mattierungsüberzüge, Druckschichten.

**19.** Komplexe zusammengesetzte Filme zur Verpackung, bestehend aus einem kristallinen oder teilkristallinen orientierten Polyesterfilmträger (A), der auf mindestens einer seiner Flächen einen Polyethylenfilm trägt, abgelagert auf einem Haftgrundierungsüberzug (B) auf Basis eines Copolyesters mit Oxysulfonylgruppen, an den er mittels eines Klebstoffs gebunden ist, dadurch gekennzeichnet, daß die Schicht (B) aus einem binären Gemisch gemäß einem der Ansprüche 1 bis 12 besteht.

**20.** Komplexe Filme zur Verpackung gemäß Anspruch 19, dadurch gekennzeichnet, daß sie zwischen der Schicht (B) und dem 5Polyethylenfilm eine Druckschicht tragen.

Patentansprüche für folgende Vertragsstaaten: ES, GR

**1.** Verfahren zur Erzielung von orientierten zusammengesetzten Polyesterfilmen mit verbessertem Haftvermögen gegenüber verschiedenen Endanwendungsüberzügen, bestehend aus einem Trägerfilm (A) aus einem kristallinen oder halbkristallinen Polyester, der auf wenigstens einer seiner Flächen eine benachbarte Schicht eines Haftgrundierungsüberzugs (B) auf Basis eines Copolyesters mit Oxysulfonylgruppen trägt, durch Absetzen dieses Überzugs durch Coextrusion, dadurch gekennzeichnet, daß man zur Bildung des Grundierungsüberzugs ein binäres Gemisch verwendet, bestehend aus:
a) einem kristallisierbaren Polyester
b) einem Copolyester mit einer Vielzahl von Oxysulfonylgruppen, worin der Zahl der wiederkehrenden Einheiten mit Oxysulfonylgruppen, ausgedrückt im Bezug auf 100 wiederkehrende Einheiten gleicher Natur, zwischen 3 und 20 beträgt, wobei die Mengenverhältnisse der Komponenten (a) und (b) in dem Gemisch derart sind, daß die Zahl der wiederkehrenden Einheiten mit Oxysulfonylgruppen, die in dem Gemisch vorhanden sind, ausgedrückt im Bezug auf die Gesamtzahl der wiederkehrenden Einheiten gleicher Natur, zwischen 2 und 15 % beträgt.

**2.** Verfahren gemäß Anspruch 1, dadurch gekennzeichnet, daß der kristalline, teilkristalline oder kristallisierbare Polyester, der als Bestandteil der Schicht (A) und Komponente (a) des binären Gemisches verwendet wird, ein Homopolyester oder ein Copolyester der Terephthalsäure mit mindestens 80 Mol-% Terephthalateinheiten ist.

**3.** Verfahren gemäß Anspruch 2, dadurch gekennzeichnet, daß der kristalline, teilkristalline oder kristallisierbare Polyester, der als Bestandteil der Schicht (A) und Komponente (a) des binären Gemisches verwendet wird, Polyethylenglykolterephthalat ist.

**4.** Verfahren gemäß einem der Ansprüche 1 bis 3, dadurch gekennzeichnet, daß der als Komponente (b) des binären Gemisches verwendete Copolyester eine Vielzahl von Oxysulfonylgruppen der allgemeinen Formel aufweist:

$$(-SO_3)_nM \qquad (I)$$

worin:
- n gleich 1 oder 2 ist
- M ein Wasserstoffatom, ein Alkalimetall, Erdalkalimetall, ein Ammoniumkation oder ein quaternäres Ammoniumkation bedeutet.

**5.** Verfahren gemäß einem der Ansprüche 1 bis 4, dadurch gekennzeichnet, daß der als Bestandteil (b) des binären Gemisches verwendete sulfonierte Copolyester eine Vielzahl von Einheiten, abgeleitet von aromatischen Disäuren oder deren Derivaten der Formel aufweist:

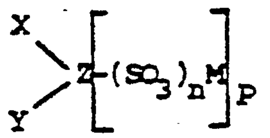

(II)

worin bedeuten:

- n ist gleich 1 oder 2
- M bedeutet ein Wasserstoffatom, ein Alkalimetall, ein Erdalkalimetall, ein Ammoniumkation oder ein quaternäres Ammoniumkation;
- Z ist ein mehrwertiger aromatischer Rest;
- X und Y sind Hydroxycarbonylreste oder Derivate: Ester niederer aliphatischer Alkohole oder Säurehalogenide (Chlorid, Bromid);
- p ist eine ganze Zahl gleich 1 oder 2.

**6.** Verfahren gemäß einem der Ansprüche 1 bis 5, dadurch gekennzeichnet, daß der sulfonierte Copolyester, der als Bestandteil (b) des binären Gemisches verwendet wird, eine Vielzahl von Einheiten, abgeleitet von einer Hydroxysulfonylisphthalsäure aufweist.

**7.** Verfahren gemäß einem der Ansprüche 1 bis 6, dadurch gekennzeichnet, daß der sulfonierte Copolyester, der als Komponente (b) des binären Gemisches verwendet wird, außerdem eine Vielzahl von Einheiten, abgeleitet von der Terephthalsäure, aufweist.

**8.** Verfahren gemäß Anspruch 7, dadurch gekennzeichnet, daß der sulfonierte Copolyester, der als Komponente (b) des binären Gemisches verwendet wird, gleichzeitig eine Vielzahl von Einheiten, abgeleitet von der Terephthalsäure, und eine Vielzahl von Einheiten, abgeleitet von der Isophthalsäure aufweist.

**9.** Verfahren gemäß Anspruch 8, dadurch gekennzeichnet, daß in dem sulfonierten Copolyester die Anzahl der Einheiten, abgeleitet von der Isophthalsäure, bis zu 70 % der Gesamtheit der Terephthalat/Isophthalateinheiten aufweist.

**10.** Verfahren gemäß einem der Ansprüche 1 bis 9, dadurch gekennzeichnet, daß der sulfonierte Copolyester, der als Komponente (b) des binären Gemisches verwendet wird, eine Vielzahl von Einheiten, abgeleitet von Ethylenglykol und/oder dessen Oligomeren mit einem Molekulargewicht unterhalb 600 aufweist.

**11.** Verfahren gemäß Anspruch 10, dadurch gekennzeichnet, daß der Gewichtsgehalt des sulfonierten Copolyesters an Einheiten, abgeleitet von Oligomeren des Ethylenglykols, zwischen 2 und 30 % beträgt.

**12.** Verfahren gemäß einem der Ansprüche 1 bis 11, dadurch gekennzeichnet, daß das binäre Gemisch 20 bis 80 Gew.-% sulfonierten Copolyester b) und 80 bis 20 Gew.-% kristallinen, teilkristallinen oder kristallisierbaren Polyester enthält.

**13.** Verfahren zur Herstellung von zusammengesetzten Filmen gemäß einem der Ansprüche 1 bis 12, dadurch gekennzeichnet, daß man in einer ersten linearen Spinndüse die Coextrusion eines kristallisierbaren Polyesters zu einem amorphen Film (A) und gleichzeitig durch mindestens eine zweite, parallel zur ersten angeordnete Spinndüse mindestens eines Films (B) aus einem binären Gemisch a) b) vornimmt, der auf mindestens eine der Flächen des Films (A) abgesetzt wird, daß man dann die Abkühlung, das Verstrecken und die Thermofixierung des zusammengesetzten Films in bekannter Weise vornimmt.